# FASCICULE DE BREVET EUROPEEN

(11) **EP 2 954 183 B1**
(45) Date de publication et mention de la délivrance du brevet: **14.03.2018**
(21) Numéro de dépôt: 14706888.6
(22) Date de dépôt: 05.02.2014
(51) Int. Cl.: F02M 26/09, F02M 26/35, F02M 26/43, F02M 26/70, F02M 26/51, F02B 37/18

(54) **DISPOSITIF D'ORIENTATION DES GAZ D'ÉCHAPPEMENT**
ANORDNUNG ZUM FÜHREN VON ABGAS
DEVICE FOR EXHAUST GAS ORIENTATION

(30) Priorité: 07.02.2013 FR 1351053
(43) Date de publication de la demande: 16.12.2015
(73) Titulaire: Valeo Systèmes de Contrôle Moteur, 95800 Cergy Saint Christophe (FR)
(72) Inventeur: HODEBOURG, Grégory, F-Sartrouville 78500 (FR); POTTEAU, Sébastien, F-78510 Triel sur Seine (FR)
(74) Mandataire: Tran, Chi-Hai
(86) Numéro de dépôt international: PCT/FR2014/050213
(87) Numéro de publication internationale: WO 2014/122394

(56) Documents cités:
- EP-A1- 2 172 682
- EP-A2- 1 387 058
- FR-A1- 2 853 011
- US-B1- 6 321 537

## Description

La présente invention concerne le domaine des moteurs à combustion, notamment les moteurs destinés à entrainer des véhicules automobiles, équipés d'un circuit de recirculation des gaz d'échappement (« Exhaust Gaz Recirculation (EGR) » en anglais) et en particulier les moteurs dont le circuit de recirculation des gaz d'échappement est appliqué sur au moins un cylindre dédié. Autrement dit, le cylindre dédié est tel que sa sortie est connectée directement à l'entrée du circuit de recirculation des gaz.

Il est connu de l'état de la technique de recirculer une partie des gaz d'échappement vers l'admission d'air, notamment en cas de faibles charges du moteur, de manière à réduire la quantité d'émissions polluantes ou la consommation de carburant.

La limite acceptable du taux de recirculation varie pour chaque type de moteur (suivant la technologie utilisée, la puissance, les réglages...) et en fonction des paramètres du moteur (régime, température...). Un dépassement de la limite acceptable peut entrainer une perte de rendement du moteur, il convient donc de pouvoir modifier le taux de recirculation quelle que soit la configuration du moteur. Pour cela, il est connu d'introduire une vanne au niveau de l'admission du cylindre dédié. Ainsi, en fermant la vanne au niveau de l'admission du cylindre dédié, seuls les cylindres non dédiés, c'est-à-dire les autres cylindres, sont utilisés ce qui permet d'éviter la recirculation des gaz et donc la perte de rendement du moteur liée à la recirculation. Cependant, l'introduction d'une telle vanne à l'admission du cylindre dédié peut générer une forte dépression au niveau du cylindre dédié du fait de l'absence de gaz à l'admission ce qui peut engendrer des pertes par pompage. Par ailleurs, si le moteur fonctionne avec seulement une partie des cylindres et notamment à froid, cela peut entrainer des vibrations supplémentaires et nécessiter l'ajout de blocs amortisseurs (silentblocs) actifs et/ou un redimensionnement de l'attelage mobile comprenant les bielles et pistons des cylindres.

Dans le cas de moteurs comprenant un turbocompresseur, la turbine du turbocompresseur n'est entrainée que par les cylindres non dédiés du moteur ce qui peut être pénalisant pour les performances du moteur. En effet, la turbine ne peut bénéficier des gaz d'échappement du cylindre dédié pour être entrainée par ceux-ci.

Le but de la présente invention est donc de contribuer à résoudre au moins partiellement les inconvénients précités de l'état de la technique. Le document FR 2 853 011 A divulgue un dispositif d'orientation des gaz d'échappement. Il est connu de l'état de la technique une vanne de décharge destinée à être installée dans un conduit de décharge d'un équipement configuré pour être entrainé par un fluide, notamment d'un turbocompresseur entrainé par des gaz d'échappement d'un moteur, ladite vanne de décharge comportant une cavité comprenant une première, une deuxième et une troisième ouvertures destinées à être reliées à un conduit respectif, la vanne de décharge comprenant également des premier et second moyens d'obturation desdites respectivement première et deuxième ouvertures pour contrôler la mise en communication des conduits. Notamment, les premiers et seconds moyens d'obturation permettent de contrôler la mise en communication du troisième conduit avec les deux autres conduits. Cette vanne de décharge permet donc de contrôler l'orientation des gaz à la sortie des cylindres et gérer l'entrainement de la turbine du turbocompresseur.

Les moyens d'obturation peuvent être fixés sur un axe de guidage configuré pour être mobile en translation entre une première position de fermeture de la première ouverture par le premier moyen d'obturation et une deuxième position de fermeture de la deuxième ouverture par le deuxième moyen d'obturation.

La vanne peut comprendre un moyen d'actionnement de l'axe de guidage, le moyen d'actionnement étant apte à être déplacé en rotation et permettant de transformer ce déplacement en rotation en un déplacement en translation de l'axe de guidage.

Le moyen d'actionnement peut comprendre une tige solidaire de l'axe de guidage, et s'étendant notamment perpendiculairement à l'axe de guidage.

La vanne peut être agencée pour que l'entrainement en rotation de la tige provoque le déplacement en translation de l'axe de guidage.

Le moyen d'actionnement peut comprendre un moteur électrique pour l'entrainement en rotation de la tige.

Le moyen d'actionnement peut comprendre un système d'engrenage entrainé en rotation par un pignon du moteur électrique et entrainant en rotation la tige.

Le moyen d'actionnement peut comprendre un ressort de torsion pour maintenir ou rappeler la tige dans une position dans laquelle les moyens d'obturation sont dans une position prédéterminée.

La distance entre les moyens d'obturation, mesurée le long de l'axe de guidage, peut être constante quelle que soit la position de l'axe de guidage lors de son déplacement en translation. Les moyens d'obturation comprennent une première et une deuxième soupapes. Les moyens d'obturation comprennent au moins une soupape respective apte à venir obturer l'ouverture correspondante. Les soupapes sont fixées sur un axe de guidage qui est configuré pour être mobile en translation entre une première position de fermeture de la première ouverture par la première soupape et une deuxième position de fermeture de la deuxième ouverture par la deuxième soupape. L'axe de guidage est une tige sur laquelle les soupapes sont positionnées. La tige est notamment confondue avec un axe central des soupapes, qui correspond en particulier à un axe de symétrie des soupapes. La cavité a une forme sensiblement tubulaire, les première et seconde ouvertures sont positionnées aux deux extrémités du tube et la troisième ouverture est réalisée sur une paroi latérale du tube. La première ouverture de la vanne de décharge est destinée à être reliée à une première partie du conduit de décharge et/ou la deuxième ouverture de la vanne de décharge est destinée à être reliée à une deuxième partie du conduit de décharge. Notamment, cette deuxième partie du conduit de décharge aboutit dans une ligne d'échappement du moteur. Il est connu de l'état de la technique une vanne de décharge destinée à être installée dans un conduit de décharge d'un équipement configuré pour être entrainé par un fluide, notamment d'un turbocompresseur entrainé par des gaz d'échappement d'un moteur, ladite vanne de décharge comportant une cavité comprenant une première, une deuxième et une troisième ouvertures destinées à être reliées à un conduit respectif, la vanne de décharge comprenant également des premier et second moyens d'obturation desdites respectivement première et deuxième ouvertures pour contrôler la mise en communication des conduits, les moyens d'obturation étant fixés sur un axe de guidage configuré pour être mobile en translation entre une première position de fermeture de la première ouverture par le premier moyen d'obturation et une deuxième position de fermeture de la deuxième ouverture par le deuxième moyen d'obturation, l'axe de guidage étant solidaire d'une tige, la tige s'étendant perpendiculairement à l'axe, l'entrainement en rotation de la tige provoquant le déplacement en translation de l'axe de guidage.

La présente invention concerne également un dispositif d'orientation des gaz d'échappement à la sortie des cylindres d'un moteur, ledit dispositif comprenant :
- une vanne de décharge destinée à être reliée en sortie d'au moins un premier cylindre du moteur,
- une vanne de recirculation de gaz d'échappement destinée à être reliée en sortie d'au moins un deuxième cylindre du moteur,
- un conduit reliant entre elles lesdites vannes.

Notamment, le premier cylindre est un cylindre non dédié à la recirculation des gaz, c'est-à-dire non directement connecté à un circuit de recirculation des gaz d'échappement ; le second cylindre est un cylindre dédié à la recirculation des gaz d'échappement, c'est-à-dire directement connecté à un circuit de recirculation des gaz d'échappement,

Selon un autre aspect de la présente invention, la vanne de recirculation de gaz d'échappement comprend un corps définissant :
- un conduit principal destiné à être raccordé d'une part à la sortie du, au moins un, deuxième cylindre et d'autre part à un conduit de recirculation des gaz, et
- un conduit auxiliaire débouchant dans ledit conduit principal et destiné à être raccordé à la troisième ouverture de la vanne de décharge,
   ladite vanne de recirculation comprenant en outre des moyens d'orientation des gaz d'échappement du au moins un cylindre configurés pour, dans une première position, permettre une pleine recirculation en empêchant la communication entre le conduit principal et le conduit auxiliaire, et dans une deuxième position, permettre une obturation du conduit principal de façon à mettre en communication le conduit principal avec le conduit auxiliaire

Selon un autre aspect de la présente invention, les moyens d'obturation de la vanne de décharge sont configurés pour être ouverts ou fermés en fonction de la configuration de la vanne de recirculation et/ou des paramètres du moteur.

Selon un aspect additionnel de la présente invention, les moyens d'orientation de la vanne de recirculation sont configurés pour être positionnés en fonction des paramètres du moteur et/ou de la configuration des moyens d'obturation de la vanne de décharge.

Selon un autre aspect de la présente invention, les paramètres moteur comprennent au moins un élément parmi les paramètres suivants :
- le régime moteur,
- la pression à la sortie des cylindres,
- la température du moteur,
- le taux d'oxygène à l'entrée des cylindres,
- le débit de gaz recirculés à l'admission.

D'autres caractéristiques et avantages de l'invention apparaîtront dans la description qui va maintenant en être faite, en référence aux dessins annexés qui en représentent, à titre indicatif mais non limitatif, des modes de réalisation possibles.

Sur ces dessins:
- la figure 1 représente un schéma d'une partie d'un moteur selon un mode de réalisation de la présente invention;
- les figures 2 et 3 représentent des vues en coupe de vannes de recirculation selon des modes de réalisation de la présente invention;
- la figure 4 représente une vue en coupe de la vanne de recirculation de la figure 2, la coupe étant réalisée parallèlement à l'axe de rotation du volet mobile ;
- la figure 5 représente une vue détaillée d'un volet mobile et son insertion au niveau de la vanne de recirculation de la figure 3 ;
- la figure 6 représente un schéma d'une vanne de décharge selon un mode de réalisation de la présente invention ;
- la figure 7 représente un schéma d'un exemple de moyens d'actionnement des moyens d'obturation de la vanne de décharge de la figure 6 ;
- les figures 8, 9, 10, 11, 12, 13 et 14 représentent différentes configurations du dispositif d'orientation des gaz d'échappement selon un mode de réalisation de l'invention.

Sur ces figures, les mêmes numéros de référence désignent des éléments identiques. Par ailleurs, pour les références comportant un numéro et une lettre, le numéro renvoie à la classe comprenant l'ensemble des éléments tandis que la lettre correspond à un élément particulier de cette classe d'éléments. Par exemple la référence 2 renvoie à l'ensemble des cylindres tandis que la référence 2a renvoie à un cylindre particulier.

Dans la description qui va suivre, on désigne de façon générale:
Le terme « by-passer » correspond à l'action de dévier un écoulement d'un circuit principal par une voie de dérivation afin d'éviter un équipement du circuit principal ;
Le terme « entrée d'un cylindre » définit la partie du cylindre où se déroule l'admission d'air, par exemple au niveau de la soupape d'admission des gaz destinés à être brûlés.
Le terme « sortie du cylindre » définit la partie du cylindre où se déroule l'évacuation des gaz, par exemple au niveau de la soupape d'évacuation des gaz pour évacuer les gaz brulés vers l'échappement.
Le terme « gaz d'échappement » définit les gaz brulés et rejetés en sortie des cylindres. Les gaz d'échappement peuvent être soit dirigés vers la ligne d'échappement soit recirculés vers l'entrée des cylindres, en particulier dans le cas du cylindre dédié.

Les modes de réalisation de la présente invention concernent notamment un système 3 de suralimentation des gaz d'admission et de recirculation des gaz d'échappement.

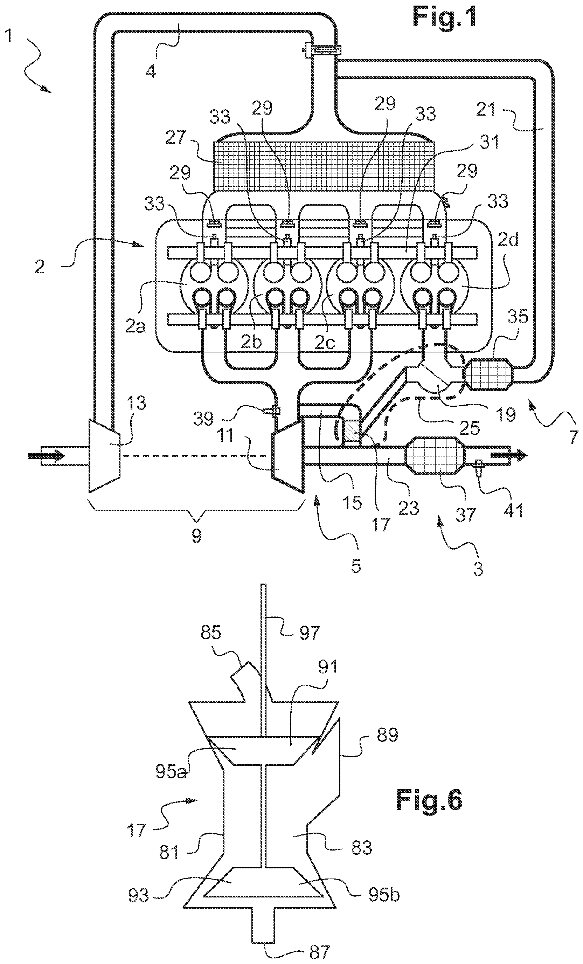

La figure 1 représente un moteur 1 comprenant un exemple d'un tel système 3. Dans l'exemple représenté, le moteur 1 comprend quatre cylindres 2 notés respectivement 2a, 2b, 2c et 2d. Un cylindre 2d est un cylindre dédié à la recirculation des gaz de sorte que les gaz issus du cylindre dédié à la recirculation des gaz 2d sont recirculés par un circuit de recirculation 7 qui sera décrit plus en détails par la suite. On obtient ainsi une quantité totale de gaz recirculés très proche de 25% dans le cas du moteur 1 comprenant quatre cylindres 2 dont un cylindre dédié 2d comme sur la figure 1.

Le système 3 comprend également un circuit de suralimentation 5 comportant un turbocompresseur 9. Le turbocompresseur 9 comprend, d'une part, une turbine 11 alimentée par des gaz d'échappement issus de cylindres 2 du moteur et, d'autre part, un compresseur 13 entrainé par la turbine pour comprimer l'air destiné à alimenter les cylindres 2 en entrée d'admission d'air. Le circuit de suralimentation 5 comprend également un conduit de décharge 15 qui permet aux gaz issus d'au moins un premier cylindre, trois dans le présent exemple, et correspondant aux cylindres non dédiés 2a, 2b et 2c, de by-passer la turbine 11 du turbocompresseur 9.

Le circuit de recirculation 7 comprend un conduit de recirculation 21 configuré pour diriger les gaz issus du cylindre dédié à la recirculation des gaz 2d vers l'admission.

Un dispositif d'orientation des gaz d'échappement 25 relié au circuit de suralimentation 5, au circuit de recirculation 7 ainsi qu'à la ligne d'échappement 23 du moteur 1 permet de contrôler la quantité de gaz mise en communication entre le circuit de suralimentation 5, le circuit de recirculation 7 et la ligne d'échappement 23. Le dispositif d'orientation 25 permet entre autres de dévier les gaz issus du cylindre dédié 2d pour qu'ils contribuent à l'entrainement de la turbine 11 du turbocompresseur 9, ou de dévier les gaz issus des cylindres non dédiés 2a, 2b, 2c pour contribuer à une mise en position de pleine recirculation du circuit 7 de recirculation des gaz d'échappement.

Le dispositif 25 peut comprendre une vanne de recirculation 19 et une vanne de décharge 17. Les vannes de décharge 17 et de recirculation 19 sont respectivement positionnées dans le conduit de décharge 15 et le conduit de recirculation 21. Lorsque la vanne de décharge 17 est ouverte, les gaz issus des cylindres non dédiés 2a, 2b, 2c et passant par le conduit de décharge 15 peuvent aller directement vers la ligne d'échappement 23. La vanne de recirculation 19 est placée à la sortie d'au moins un deuxième cylindre correspondant au cylindre dédié à la recirculation des gaz 2d. La vanne de recirculation 19 est configurée pour diriger les gaz issus du cylindre dédié 2d soit vers l'admission via le conduit de recirculation 21 soit vers la ligne d'échappement 23 via la vanne de décharge 17.

Il est à noter que la figure 1 représente un exemple de réalisation utilisant la vanne de recirculation 19 et la vanne de décharge 17, cependant le circuit de recirculation 7 et la vanne de recirculation 19 pourraient être insérés dans une architecture différente ne comprenant pas de circuit de suralimentation 5. Dans ce cas, la vanne de recirculation 19 serait reliée directement à la ligne d'échappement 23. De la même manière, la vanne de décharge 17 pourrait être utilisée dans une architecture différente.

Le système 3 peut également comprendre un refroidisseur d'air d'alimentation 27, par exemple un refroidisseur d'air refroidi par eau (« Water cooled charged air cooler (WCCAC) » en anglais) qui est situé au niveau de l'admission en aval de l'arrivée du conduit de recirculation 21 et en amont des cylindres 2. Ainsi, le refroidisseur 27 permet de refroidir d'une part les gaz extérieurs issus du turbocompresseur 9 qui ont été chauffés par la compression subie au niveau du compresseur 13 et d'autre part les gaz recirculés issus du cylindre dédié à la recirculation des gaz 2d, ce qui permet de n'utiliser qu'un seul refroidisseur 27 pour refroidir l'ensemble des gaz reçus en entrée des cylindres 2.

Par ailleurs, l'utilisation d'un tel refroidisseur 27 permet de combiner les gaz recirculés et les gaz extérieurs de manière à alimenter les cylindres 2 avec un gaz homogène de sorte que la concentration en gaz recirculés sera la même pour tous les cylindres 2. A cet effet, le refroidisseur 27 peut comprendre des perturbateurs destinés à répartir les gaz autour des canalisations dans lesquels circulent l'eau. Ces perturbateurs sont réalisés par exemple par des petites ailettes et contribuent ainsi à obtenir un mélange homogène en sortie du refroidisseur 27.

Les cylindres 2 peuvent également comprendre chacun un injecteur 29, par exemple un injecteur de type multipoint, une bobine d'allumage à haute énergie 31 (qui peut être commune aux différents cylindres) et une bougie d'allumage 33. Le moteur 1 peut également comprendre un échangeur de chaleur, par exemple un catalyseur de conversion à la vapeur d'eau (« Water Gas Shift (WGS) catalyst » en anglais) 35 au niveau du conduit de recirculation 21, un catalyseur trois voies 37 au niveau de la ligne d'échappement 23, une sonde lambda chauffée (« Heated Exhaust Gas Oxygen (HEGO) sensor » en anglais) 39 à la sortie des cylindres 2a, 2b et 2c et une sonde lambda 41 au niveau de la ligne d'échappement 23.

Le fonctionnement global du système 3 de suralimentation des gaz d'admission et de recirculation des gaz d'échappement du moteur 1 va maintenant être décrit en détail à partir du schéma de la figure 1. L'air extérieur est reçu au niveau du compresseur 13 qui le comprime lorsque la turbine 11 du turbocompresseur 9 est alimentée par les gaz d'échappement en sortie des cylindres 2. L'air est ensuite transmis vers l'admission via un conduit d'admission 4. Lorsque la turbine 11 n'est pas alimentée par les gaz d'échappement en sortie des cylindres 2, l'air extérieur est alors reçu au niveau du conduit d'admission sans être comprimé par le compresseur 13.

Au niveau de l'admission, l'air est mélangé aux gaz recirculés provenant du conduit de recirculation 21 lorsque le dispositif d'orientation 25 permet une recirculation des gaz d'échappement. Ceci est notamment le cas, lorsque la vanne de recirculation 19 est en position de recirculation des gaz. Le mélange d'air extérieur et des gaz recirculés est ensuite refroidi dans l'échangeur de chaleur 27, notamment pour réduire le nombre de particules émises. De plus, l'échangeur de chaleur contribue à obtenir un mélange homogène.

Le mélange arrive ensuite au niveau des cylindres 2 où il est mélangé au carburant pulvérisé par les injecteurs 29, le tout étant enflammé par le biais des bougies 33. Une fois brûlés, les gaz sont expulsés vers la sortie des cylindres 2 pour être éventuellement orientés par le dispositif 25. Notamment, au niveau du cylindre dédié 2d, en fonction de la position de la vanne de recirculation 19 les gaz issus du cylindre dédié 2d sont soit totalement recirculés vers l'admission, soit totalement dirigés vers la vanne de décharge 17, soit une partie est recirculée et une partie est dirigée vers la vanne de décharge 17. En fonction de la position de la vanne de décharge 17, la partie des gaz issus du cylindre dédié 2d et transmise à la vanne de décharge 17 est soit utilisée pour alimenter la turbine 11 du turbocompresseur 9, soit transmise directement vers la ligne d'échappement 23. Les gaz issus des autres cylindres 2a, 2b et 2c sont soit utilisés pour alimenter la turbine 11 du turbocompresseur 9 soit transmis directement vers l'échappement en fonction de la configuration de la vanne de décharge 17.

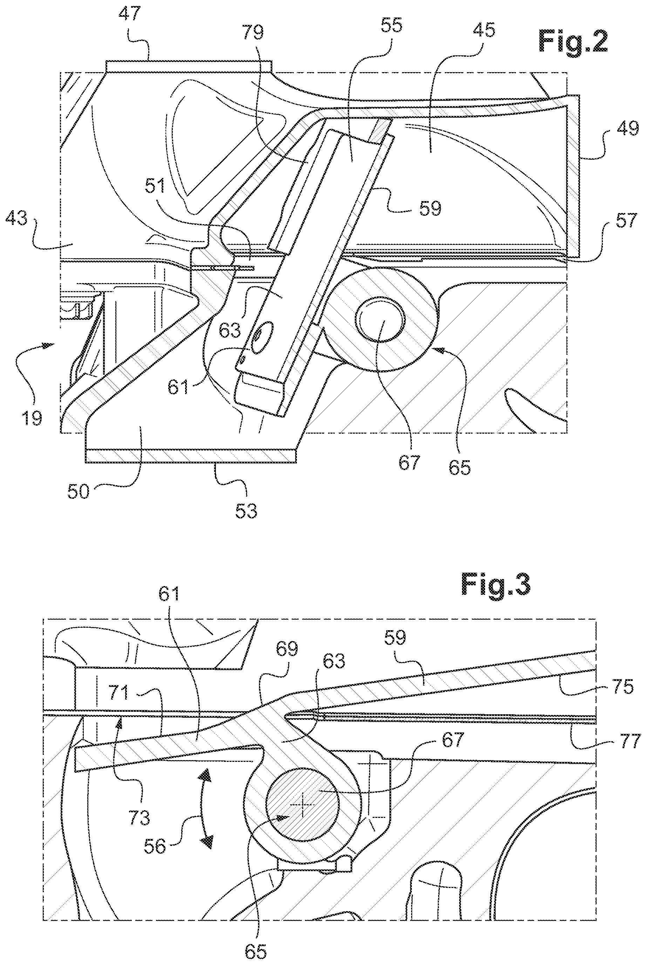

Un exemple de vanne de recirculation 19 selon l'invention va maintenant être décrite plus en détails à partir des figures 2 à 5.

La vanne de recirculation 19 comprend un corps de vanne 43 qui définit un conduit principal 45 relié d'une part à la sortie du cylindre dédié à la recirculation des gaz 2d via un orifice d'entrée 47 et d'autre part au conduit de recirculation 21 via un orifice de sortie 49. Le corps de vanne 43 décrit également un conduit auxiliaire 50 débouchant dans le conduit principal 45 par une fenêtre de passage 51.

La vanne de recirculation 19 comprend en outre des moyens d'orientation des gaz qui permettent de contrôler la quantité de gaz recirculés afin d'éviter un étouffement du moteur 1. Les moyens d'orientation peuvent comporter un volet mobile 55 au niveau du raccord entre le conduit principal 45 et le conduit auxiliaire 50. Cependant, il est à noter que d'autres moyens d'orientation connus de l'homme du métier peuvent également être utilisés comme par exemple un ensemble de clapets situés au niveau du conduit principal et du conduit auxiliaire.

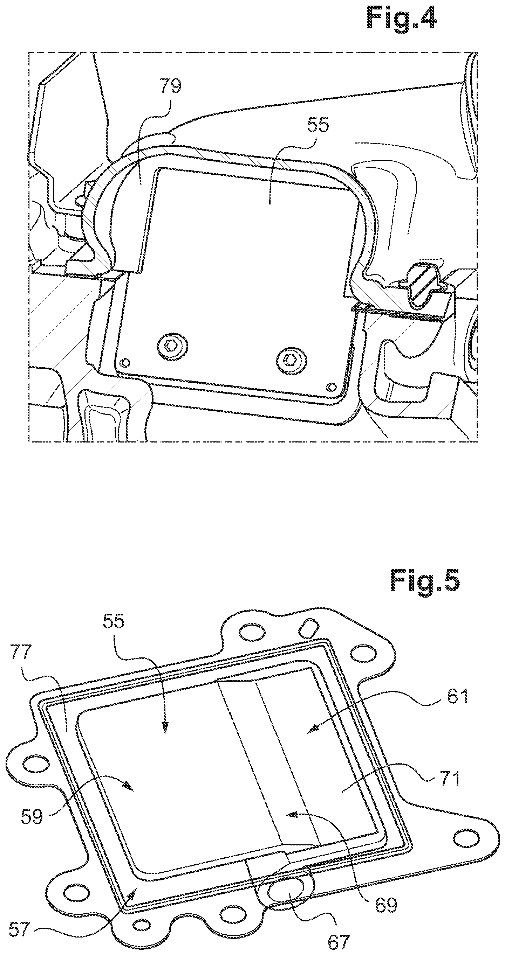

Les figures 2 et 3 représentent une vue en coupe de la vanne de recirculation 19 dans lesquelles la coupe est réalisée suivant la longueur du volet 55 tandis que les figures 4 et 5 représente des vues de face du volet 55. Le volet mobile 55 est configuré pour pouvoir se mouvoir en rotation et basculer entre une première position de pleine recirculation et une deuxième position d'obturation du conduit principal 45 comme représenté sur la figure 2. Le volet mobile 55 peut occuper n'importe quelle position intermédiaire entre la position de pleine recirculation et la position d'obturation du conduit principal 45. La rotation du volet mobile 55 est représentée par la flèche 56 sur la figure 3.

En position de pleine recirculation, le volet mobile 55 ferme la fenêtre de passage 51 et empêche la mise en communication du conduit auxiliaire 50 et du conduit principal 45.

En position d'obturation du conduit principal 45, la partie amont du conduit principal 45, c'est à dire la partie du conduit principal 45 située entre l'orifice d'entrée 47 et le raccord avec le conduit auxiliaire 50, est mise en communication avec le conduit auxiliaire 50 tandis que la partie avale du conduit principal 45, c'est à dire la partie située entre le raccord avec le conduit auxiliaire 50 et l'orifice de sortie 49, est obturée.

Sur la figure 3, le volet 55 est dans une position intermédiaire entre la position de pleine recirculation et la position d'obturation du conduit principal 45.

Un joint 57 présentant une ouverture en correspondance avec la fenêtre de passage 51 est disposé au niveau du raccord entre le conduit principal 45 et le conduit auxiliaire 50 pour assurer l'étanchéité entre les deux conduits 45 et 50 lorsque le volet mobile 55 est en position de pleine recirculation. Le joint 57 peut être un joint saillant qui est maintenu entre deux brides et qui fait saillie vers l'intérieur des conduits 45 et 50. Ainsi lorsque le volet mobile 55 vient, en position de pleine recirculation, en contact avec le joint 57, il permet de réaliser l'étanchéité entre les deux conduits 45 et 50. L'utilisation d'un joint d'étanchéité 57 permet d'obtenir une étanchéité proche de 100% dans la position de pleine recirculation ce qui permet de contrôler précisément la quantité des gaz recirculés. Ainsi, dans l'exemple d'application illustré en figure 1, la quasi-totalité des gaz issus du cylindre dédié 2d est recirculée lorsque le volet mobile 55 est en position de pleine recirculation, et donc on obtient un taux de gaz recirculé constant, par exemple 25% dans le cas d'un moteur quatre cylindres dont un des cylindres est dédié à la recirculation.

Le volet mobile 55 présente une aile dite d'obturation 59 et une aile de déviation 61 reliées entre elles par une zone intermédiaire 63, lesdites ailes d'obturation 59 et de déviation 61 étant positionnées de part et d'autre du joint d'étanchéité 57 tandis que la zone intermédiaire 63 traverse l'ouverture du joint 57. Les deux ailes 59 et 61 viennent en contact avec le joint d'étanchéité 57 en position de pleine recirculation. Le volet mobile 55 comprend également, à proximité de la zone intermédiaire 63, un axe d'articulation 65 qui permet la rotation du volet mobile entre la position de pleine recirculation et la position d'obturation du conduit principal 45. L'axe d'articulation 65 est excentré par rapport aux ailes d'obturation 59 et de déviation 61. L'axe d'articulation 65 est par exemple formé par un arbre d'articulation 67 qui est fixé à ses extrémités et autour duquel le volet 55 est guidé en rotation. De manière alternative, l'axe d'articulation 65 peut être solidaire du volet 55 et guidé en rotation par des paliers situés aux deux extrémités de l'axe d'articulation 65.

Les dimensions des ailes 59 et 61 selon l'axe d'articulation 65 du volet 55 pourront être différentes l'une de l'autre et différentes de l'axe d'articulation 65 lui-même. De plus, dans un premier mode de réalisation, les ailes d'obturation 59 et de déviation 61 pourront être alignées comme représenté sur les figures 2 et 4 tandis que dans un deuxième mode de réalisation représenté sur les figures 3 et 5, les ailes d'obturation 59 et de déviation 61 pourront être parallèles mais ne pas être alignées, c'est-à-dire appartenir à des plans différents pour favoriser l'étanchéité au niveau du joint 57. Dans ce deuxième mode de réalisation, la zone intermédiaire 63 pourra comprendre un pan incliné 69. Ainsi, en position de pleine recirculation, la face supérieure 71 de l'aile de de déviation 61 vient en contact avec une première partie 73 du joint 57 et la face inférieure 75 de l'aile d'obturation 59 vient en contact avec une deuxième partie 77 du joint 57.

Le conduit principal 45 peut également comprendre une butée périphérique 79 positionnée sur le pourtour du conduit principal 45 au niveau du raccord avec le conduit auxiliaire 50de sorte qu'en position d'obturation du conduit principal 45, l'aile d'obturation 59 vient en appui sur la butée périphérique 79. En particulier, la butée 79 est alors au droit de l'aile d'obturation 59. Les bords périphériques des trois côtés extérieurs de l'aile d'obturation 59 étant alors en contact avec la butée périphérique 79. La présence de la butée périphérique 79 permet ainsi d'assurer une étanchéité supérieure à 95% entre la partie amont et la partie avale du conduit principal 45 dans cette position. La quasi-totalité des gaz est alors transmise vers le conduit auxiliaire 50.

La butée périphérique 79 est fixée au conduit principal 45 par exemple par collage. De plus, la hauteur de la butée périphérique 79, c'est-à-dire l'épaisseur de la butée dans le conduit principal 45, sera limitée de manière à réduire le moins possible le débit de gaz dans le conduit principal 45 en position de pleine recirculation du volet 55.

Au niveau du raccord entre le conduit principal 45 et le conduit auxiliaire 50, les sections des conduits sont, par exemple, de forme sensiblement rectangulaire de même que les ailes d'obturation 59 et de déviation 61.

La vanne de recirculation 19 est également munie de moyens d'actionnement du volet mobile 55 permettant de positionner le volet mobile 55 en position de pleine recirculation ou en position d'obturation du conduit principal 45 ou dans une position intermédiaire. Les positions intermédiaires correspondent aux positions pour lesquelles la partie amont du conduit principal 45 est à la fois en communication avec la partie avale du conduit principal 45 et avec le conduit auxiliaire 50. En effet, suivant la configuration et les paramètres du moteur 1, il peut être nécessaire de recirculer seulement une partie des gaz issus du cylindre dédié 2d pour optimiser le rendement à certains points de fonctionnement du moteur, l'autre partie des gaz étant orientée dans le conduit auxiliaire, par exemple vers l'échappement. Ces moyens d'actionnement comprennent par exemple un moteur électrique et un système d'engrenage permettant de piloter la position du volet 55 à partir du moteur électrique.

De plus, la vanne de recirculation 19 peut également comprendre un moyen mécanique élastique, comme par exemple un ressort, configuré pour exercer une force de rappel sur le volet 55 vers la position d'obturation du conduit principal 45. Ainsi, en cas de non-fonctionnement ou de panne des moyens d'actionnement du volet 55, ledit volet 55 est positionné par défaut en position d'obturation du conduit principal 45 ce qui correspond à un fonctionnement sans recirculation de gaz d'échappement et permet de pouvoir faire fonctionner correctement le moteur à tous ses points de fonctionnement.

L'utilisation d'une telle vanne de recirculation 19 positionnée à la sortie du cylindre dédié 2d permet donc d'utiliser une seule vanne pour orienter les gaz issus du cylindre dédié 2d vers le conduit de recirculation 21 ou vers l'échappement. La vanne de recirculation 19 permet d'autoriser ou d'interrompre la recirculation des gaz d'échappement issus du cylindre dédié 2d. Dans l'art antérieur, cette fonction est réalisée par une vanne située en amont du cylindre dédié 2d au niveau de l'admission, ce qui génère des problèmes de dépression à l'admission et de pertes par pompage. La position de la vanne de recirculation 19 à la sortie du cylindre dédié 2d permet d'éviter ces problèmes.

De plus, l'utilisation d'une butée périphérique 79 au niveau du conduit principal 45 permet d'obtenir une étanchéité supérieure à 95% en position d'obturation du conduit principal 45. Ceci permet, dans une utilisation combinée avec la vanne de décharge 17 qui sera décrite plus en détails dans la suite de la description, de pouvoir alimenter la turbine 11 du turbocompresseur 9 avec la quasi-totalité des gaz issus du cylindre dédié à la recirculation des gaz 2d lorsque la vanne de décharge 17 est configurée pour cela.

Enfin, configurer les moyens d'obturation, notamment le volet 55, pour que sa position par défaut soit la position d'obturation du conduit principal 45 permet d'éviter un blocage en position de pleine recirculation en cas de défaillance des moyens d'actionnement de la vanne de recirculation 19.

Par ailleurs, il est à noter que les modes de réalisation de la présente invention ne se limitent pas à un moteur 1 à quatre cylindres 2 comprenant un cylindre dédié 2d mais s'étendent également à des moteurs ayant un nombre total de cylindres et/ou de cylindres dédiés différent. Par exemple, le moteur peut comprendre deux cylindres dédiés dont les gaz sont dirigés vers une vanne de recirculation 19 commune aux deux cylindres dédiés ou à l'utilisation de deux vannes de recirculation 19 pour diriger respectivement les gaz issus des cylindres dédiés respectifs. D'autre part, la figure 1 représente un exemple d'application de la vanne de recirculation 19, cependant la vanne de recirculation 19 peut également être utilisée dans d'autres architectures comprenant une recirculation des gaz sur un cylindre dédié.

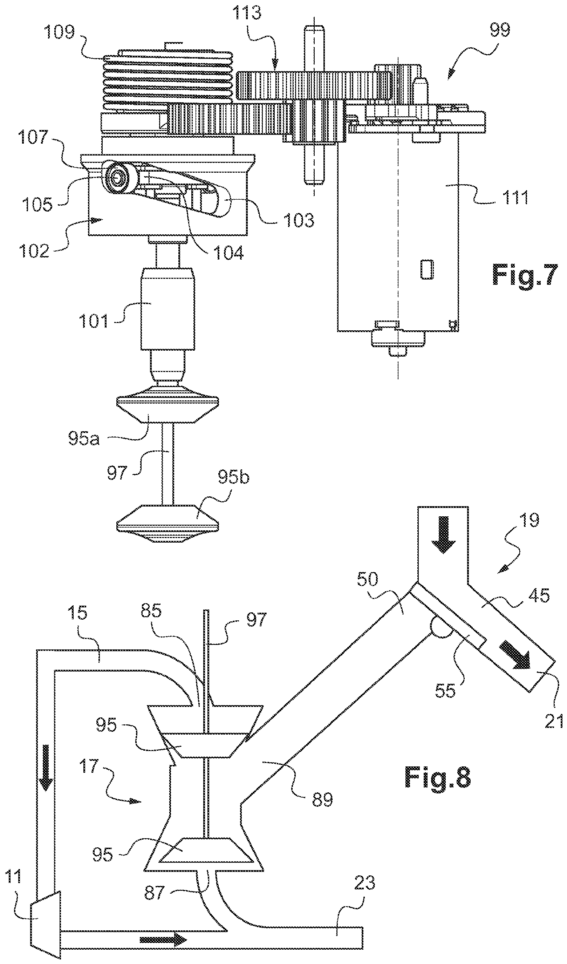

Un exemple de vanne de décharge 17 selon l'invention va maintenant être décrit en faisant référence aux figures 6 et 7. La vanne de décharge 17 comprend un corps 81 définissant une cavité 83, par exemple de forme tubulaire, comprenant une première 85, une deuxième 87 et une troisième 89 ouvertures destinées à être reliées chacune à un conduit respectif. En particulier, la première ouverture 85 est située à une première extrémité de la cavité 83. La deuxième ouverture 87 est située à l'autre extrémité de la cavité 83 . La troisième ouverture 89 est située sur la paroi latérale de la cavité 83. Dans l'exemple d'application particulier illustré en figure 1, la première ouverture 85 est reliée à la sortie des cylindres non dédiés 2a, 2b et 2c via le conduit de décharge 15 du turbocompresseur 9, la deuxième ouverture 87 est reliée à la ligne d'échappement 23 et la troisième ouverture 89 est reliée au conduit auxiliaire 50 de la vanne de recirculation 19.

La vanne de décharge 17 comprend également des premier 91 et deuxième 93 moyens d'obturation qui peuvent venir obturer les respectivement première 85 et deuxième 87 ouvertures de manière à contrôler la mise en communication des conduits reliés aux ouvertures de la vanne de décharge 17.

Les moyens d'obturation 91 et 93 sont réalisés, par exemple, par une première 95a et une deuxième 95b soupapes montées sur un axe de guidage 97 commun comme représenté sur la figure 6. L'axe de guidage 97 est mobile en translation entre une première position dans laquelle la première soupape 95a ferme la première ouverture 85 et une deuxième position dans laquelle la deuxième soupape 95b ferme la deuxième ouverture 87. L'axe de guidage pouvant également prendre une position intermédiaire dans laquelle la première 95a et la deuxième 95b soupapes n'obturent pas la première 85 ou la deuxième 87 ouvertures. En effet, lorsque l'axe de guidage 97 est dans la première position comme représenté sur la figure 6, la première soupape 95a vient s'appuyer sur la paroi du corps 81 de la vanne de décharge 17 pour empêcher la communication entre la cavité 83 et le conduit relié à la première ouverture 85. De la même manière dans la deuxième position, la deuxième soupape 95b vient en contact avec le corps de vanne 81 pour empêcher la communication entre la cavité 83 et le conduit relié à la deuxième ouverture 87. L'axe de guidage 97 est par exemple une tige confondue avec un axe central des moyens d'obturation.

Un joint peut également être placé entre la paroi du corps de vanne 81 et les soupapes 95a et 95b pour assurer une bonne étanchéité en position fermée. Les soupapes 95a et 95b peuvent être faites de matière avec l'axe de guidage 97 ou peuvent être montées sur l'axe et maintenues en position, par exemple via des colliers de serrage ou par des soudures.

La vanne de décharge 17 peut également comprendre des moyens d'actionnement 99 de l'axe de guidage 97 qui permettent de contrôler l'ouverture ou la fermeture des soupapes 95. Un exemple de réalisation des moyens d'actionnement 99 est représenté sur la figure 7 avec l'axe de guidage 97 et les soupapes 95a et 95b. L'axe de guidage 97 est monté mobile en translation sur un palier fixe 101. L'axe 97 est solidaire en translation d'une tige 104, également appelée T-bar qui s'étend perpendiculairement à l'axe de guidage 97. La T-bar 104 comprend un plot de retenue 105 et une roue 107 fixée à son extrémité et mobile en rotation autour de la T-bar 104. La roue 107 vient s'insérer dans une came 103 de sorte que la rotation de la T-bar 104 autour d'un axe correspondant avec l'axe de guidage 97 provoque le déplacement de la roue 107 dans la came 103, et entraîne le déplacement en translation de l'axe 97. Le déplacement en rotation de la T-bar 104 est contrôlé par un moteur électrique 111 via un système d'engrenages 113. La rotation du moteur électrique entraîne la rotation des engrenages 113 qui font pivoter la T-bar 104. Les moyens d'actionnement peuvent comprendre un moyen élastique configuré de sorte qu'en l'absence d'actionnement du moteur 109, la T-bar 104 revient dans sa position de repos à l'une des extrémités de la came 103 correspondant à l'une des positions extrêmes de l'axe de guidage 97, c'est-à-dire, soit en position d'obturation de la première ouverture 85 de la vanne de décharge 17, soit en position d'obturation de la deuxième ouverture 87 de la vanne de décharge 17. Par exemple, le retour en position de repos est provoqué par le ressort 109 préalablement comprimé par les engrenages 113.

Ainsi, l'entrainement en rotation de l'élément 104 par le moteur électrique 111 provoque le déplacement du plot de retenue 105 et de la roue 107 le long de la came 103 et entraîne le déplacement en translation de l'axe de guidage 97 entre la première et la deuxième position.

Cependant, les modes de réalisation de la présente invention ne se limitent aux moyens d'actionnement présentés ci-dessus mais à tous moyens d'actionnement connus de l'homme du métier.

Par ailleurs, selon un mode de réalisation alternatif, les soupapes 95 peuvent être actionnées indépendamment l'une de l'autre. De plus, les soupapes 95 peuvent également être remplacées par des clapets qui viennent fermer la première 85 et la deuxième 87 ouvertures.

Une telle vanne de décharge 17 permet ainsi de contrôler la mise en communication des différents conduits reliés à ses ouvertures 85, 87 et 89. En particulier, dans le système illustré en figure 1, la vanne de décharge contribue au contrôle de l'orientation des gaz issus des différents cylindres 2. Ainsi, lorsque les premiers moyens d'obturation 91 ferment la première ouverture 85, le conduit de décharge 15 est obturé et les gaz issus des cylindres non dédiés 2a, 2b et 2c alimentent la turbine 11 du turbocompresseur 9. Lorsque, les premiers 91 et deuxième 93 moyens d'obturation laissent la première 85 et deuxième 87 ouvertures ouvertes, les conduits reliés aux ouvertures 85, 87 et 89 de la vanne de décharge 17 sont alors mis en communication. Enfin, lorsque les deuxièmes moyens d'obturation 93 ferment la deuxième ouverture 87, les gaz issus de la première ouverture 85 peuvent circuler vers la troisième ouverture 89 ou à l'inverse, les gaz issus de la troisième ouverture 89 peuvent circuler vers la première ouverture 85, l'un ou l'autre cas pouvant être déterminés par la pression des différents gaz en entrée des première 85 et troisième 89 ouvertures. Cependant, il est à noter que les applications de la vanne de décharge 17 ne se limitent pas à l'architecture présentée sur la figure 1 mais s'étendent à tout conduit de décharge d'un équipement configuré pour être entraîné par un fluide.

La vanne de recirculation 19 et la vanne de décharge 17 ayant été décrites en détails, il convient maintenant de considérer un dispositif 25 d'orientation des gaz d'échappement selon l'invention comprenant la combinaison des deux vannes 17 et 19. En effet, dans ce dispositif 25, les deux vannes 17 et 19 fonctionnent en synergie de manière à procurer des possibilités supplémentaires pour la configuration du moteur et en particulier dans la configuration du système 3 de suralimentation des gaz d'admission et de recirculation des gaz d'échappement de manière à optimiser son fonctionnement.

Par exemple, les moyens d'obturation 91 et 93 de la vanne de décharge 17 sont configurés pour être ouverts ou fermés en fonction notamment de la configuration de la vanne de recirculation 19 et en particulier en fonction de la position des moyens d'orientation de ladite vanne de recirculation 19. Inversement, les moyens d'orientation de la vanne de recirculation 19 peuvent être positionnés en fonction des positions des moyens d'obturation 91, 93 de la vanne de décharge 17.

Les moyens d'actionnement des deux vannes 17, 19 peuvent en outre être configurés pour être pilotés en fonction des paramètres du moteur 1. Les paramètres du moteur 1 comprennent notamment le régime moteur, la température du moteur, la pression à la sortie des différents cylindres 2, le taux d'oxygène à l'entrée des cylindres 2 ou le débit de gaz recirculés à l'admission. Ces paramètres peuvent par exemple être mesurés par des capteurs dédiés comme les sondes lambda 39 et 41, les mesures étant traitées par des moyens de traitement tels qu'un microcontrôleur ou un microprocesseur qui gère les différents réglages du moteur 1. Les moyens de traitement peuvent être configurés pour piloter les moyens d'actionnement des vannes 17 et 19.

Par exemple, si le moyens d'orientation de la vanne de recirculation 19 sont en position de pleine recirculation et si le taux d'oxygène en entrée des cylindres est inférieur à un seuil prédéterminé, les moyens de traitement pilotent les moyens d'orientation de la vanne de recirculation 19 de manière à passer en position d'obturation du conduit principal 45 ou dans une position intermédiaire pour faire remonter ce taux d'oxygène. Les moyens d'obturation 91 et 93 de la vanne de décharge 17 sont également pilotés par les moyens de traitement pour s'adapter à la position des moyens d'orientation de la vanne de recirculation 19 et/ou également aux autres paramètres du moteur 1. La programmation des moyens de traitement est par exemple réalisée en fonction de tests effectués en appliquant différentes configurations du système 3 de suralimentation des gaz d'admission et de recirculation des gaz d'échappement aux différentes situations auxquelles le moteur peut être exposé, et en sélectionnant la meilleure configuration pour chaque situation, les différentes situations étant définies par les différents paramètres du moteur 1.

Il est également à noter que les vannes de recirculation 19 et de décharge 17 décrites précédemment à partir des figures 2 à 7 sont des exemples particulier de vannes du système 3 de suralimentation des gaz d'admission et de recirculation des gaz d'échappement et que ce dernier peut également être configuré avec des vannes différentes permettant la recirculation des gaz d'échappement et la décharge du circuit de suralimentation.

Les modes de réalisation de la présente invention concernent également un procédé de commande du système 3 de suralimentation des gaz d'admission et de recirculation des gaz d'échappement du moteur 1. Le procédé concerne essentiellement le pilotage des moyens d'orientation de la vanne de recirculation 19 et des moyens d'obturation 91 et 93 de la vanne de décharge 17. Le pilotage peut être réalisé en fonction des paramètres du moteur de manière à optimiser le fonctionnement du moteur 1 pour permettre entre autres un rendement maximal et/ou une pollution minimale. Les moyens d'orientation et d'obturation peuvent prendre les différentes configurations décrites ci-après et ainsi contrôler la quantité de gaz échangée entre le circuit de suralimentation 5, la circuit de recirculation 7 et la ligne d'échappement 23.

Différentes configurations du dispositif 25 d'orientation des gaz d'échappement vont maintenant être décrites en détail à partir des figures 8 à 12. Sur ces figures, les flèches représentent le sens de circulation des gaz.

La figure 8 représente une première configuration dans laquelle la vanne de recirculation 19 est en position de pleine recirculation et la première ouverture 85 de la vanne de décharge 17 est obturée par les premiers moyens d'obturation 91. Ainsi, les circuits de suralimentation 5 et de recirculation 7 des gaz sont isolés l'un de l'autre, les gaz issus du cylindre dédié 2d sont recirculés vers l'admission tandis que les gaz issus des autres cylindres, c'est-à-dire des cylindres non dédiés 2a, 2b et 2c, sont orientés vers la turbine 11 du turbocompresseur 9. Une telle configuration est par exemple utilisée lors des accélérations à faible charges.

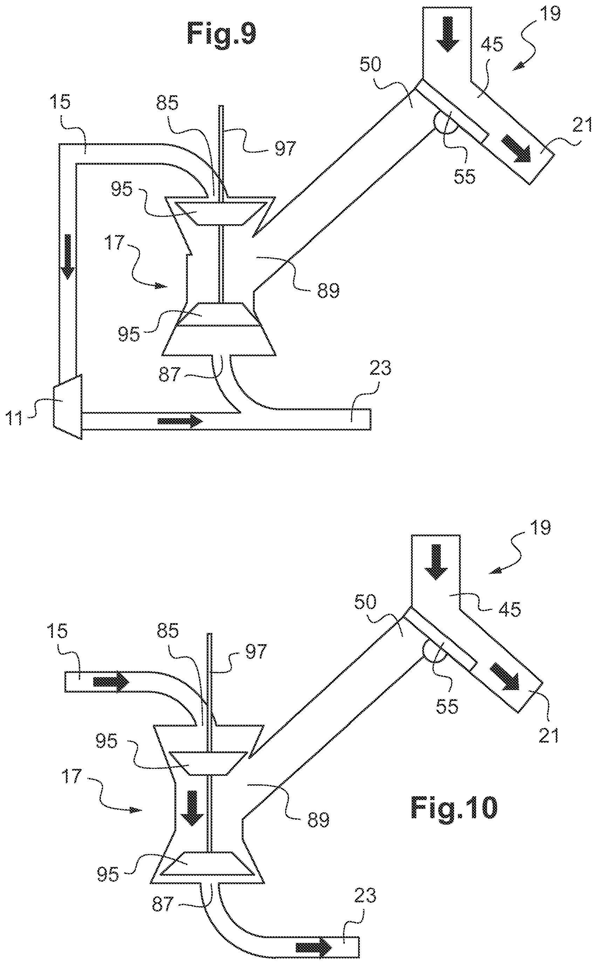

La figure 9 représente une deuxième configuration dans laquelle la vanne de recirculation 19 est en position de pleine recirculation, la première ouverture 85 de la vanne de décharge 17 est en position ouverte et la deuxième ouverture 87 de la vanne de décharge 17 est position fermée. Les gaz issus du cylindre dédié 2d sont recirculés vers l'admission et les gaz issus des autres cylindres 2a, 2b et 2c sont orientés vers la turbine 11 du turbocompresseur 9. A la différence de la première configuration, les gaz issus des autres cylindres 2a, 2b et 2c permettent d'exercer une pression sur le volet mobile 55 de la vanne de recirculation 19 et ainsi de réduire l'effort nécessaire aux moyens d'actionnement du volet mobile 55 pour maintenir le volet 55 en position de pleine recirculation.

La figure 10 représente une troisième configuration dans laquelle la vanne de recirculation 19 est en position de pleine recirculation et les première 85 et deuxième 87 ouvertures de la vanne de décharge 17 sont en position ouvertes, c'est-à-dire que les premier et deuxième moyens d'obturation 95 n'obturent pas ces ouvertures 85 et 87. Les gaz issus du cylindre dédié 2d sont alors recirculés vers l'admission et au moins une partie des gaz issus des autres cylindres 2a, 2b et 2c sont envoyés directement vers l'échappement par le conduit de décharge 15 en by-passant la turbine 11 du turbocompresseur 9. Une telle configuration peut correspondre par exemple à un mode économique permettant de réduire au maximum la consommation et les émissions polluantes du moteur 1.

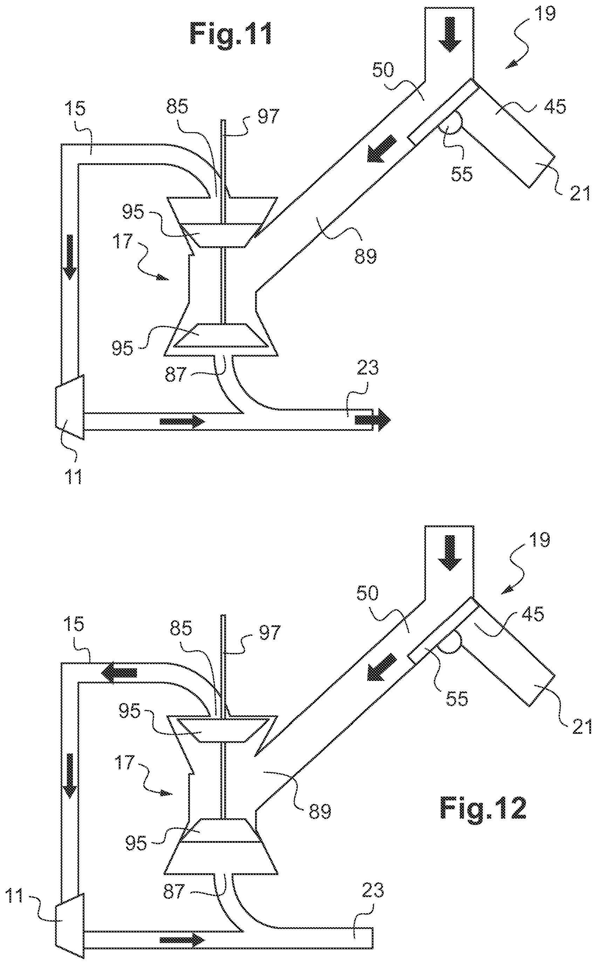

La figure 11 représente une quatrième configuration dans laquelle la vanne de recirculation 19 est en position d'obturation du conduit principal 45, la première ouverture 85 de la vanne de décharge 17 est en position fermée et la deuxième ouverture 87 de la vanne de décharge 17 est en position ouverte. Ainsi, les circuits de suralimentation 5 et de recirculation 7 des gaz sont isolés l'un de l'autre et les gaz issus du cylindre dédié 2d sont envoyés directement vers la ligne d'échappement 23 tandis que les gaz issus des autres cylindres 2a, 2b et 2c sont orientés vers la turbine 11 du turbocompresseur 9. Une telle configuration peut être utilisée par exemple lorsque l'on a besoin de puissance mais que l'on craint un manque d'oxygène au niveau de l'entrée des cylindres 2 du moteur dû par exemple à une utilisation en altitude.

La figure 12 représente une cinquième configuration dans laquelle la vanne de recirculation 19 est en position d'obturation du conduit principal 45, la première ouverture 85 de la vanne de décharge 17 est en position ouverte et la deuxième ouverture 87 de la vanne de décharge 17 est position fermée. Ainsi, les gaz issus de l'ensemble des cylindres 2 sont mis en communication et alimentent la turbine 11 du turbocompresseur 9. Une telle configuration peut être utilisée à froid ou lorsque la puissance maximale est recherchée, par exemple lors de fortes accélérations et à haut régime moteur. La configuration des vannes de recirculation 19 et de décharge 17 permet donc d'alimenter la turbine 11 du turbocompresseur 9 par les quatre cylindres 2a, 2b, 2c et 2d ce qui permet d'accroitre l'efficacité du turbocompresseur 9 et d'éviter un déséquilibre pouvant provoquer des vibrations néfastes dues à l'utilisation de trois cylindres 2a, 2b et 2c pour alimenter la turbine 11 du turbocompresseur 9, notamment lorsque le moteur 1 est froid.

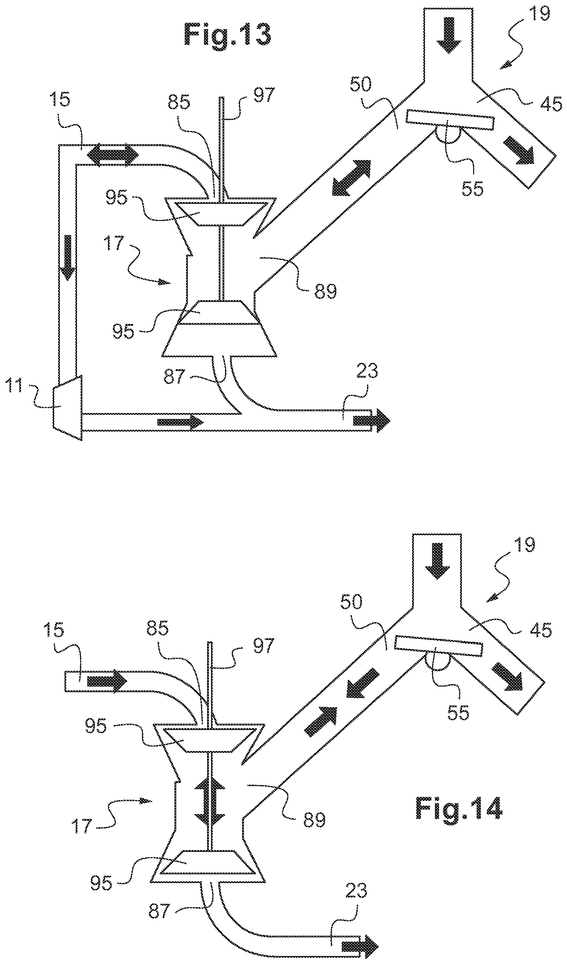

Il est à noter que les configurations possibles du dispositif 25 d'orientation des gaz ne se limitent pas aux configurations décrites précédemment mais s'étendent également aux configurations où la position du volet mobile 55 est dans une position intermédiaire. La vanne de décharge 17 peut alors être configurée en conséquence par rapport à cette position du volet 55 et aux paramètres du moteur 1. En particulier, la configuration représentée sur la figure 13 dans laquelle la deuxième ouverture 87 de la vanne de décharge 17 est en position fermée et dans laquelle le volet mobile 55 est en position intermédiaire permet une mise en communication des gaz issus de tous les cylindres 2 et peut permettre une alimentation du circuit de recirculation 7 à partir des gaz issus des autres cylindres 2a, 2b et 2c de manière à obtenir un taux de recirculation supérieur à 25%. Cependant, dans une telle configuration, la distribution des gaz entre le circuit de recirculation 7 et la turbine 11 du turbocompresseur 9 dépend de la pression des gaz dans les différents conduits du dispositif d'orientation des gaz 25. De même, la figure 14 représente une configuration dans laquelle le volet 55 est en position intermédiaire. Dans cette configuration la première 85 et la deuxième 87 ouvertures sont en position ouverte, ce qui permet une mise en communication des gaz issus de tous les cylindres 2 et de la ligne d'échappement 23 de sorte que la répartition des gaz entre la recirculation et l'échappement est dictée par les pressions des gaz dans les différents conduits du dispositif d'orientation.

Ainsi, un tel système 3 de suralimentation des gaz d'admission et de recirculation des gaz d'échappement du moteur 1 permet à la fois de recirculer une partie des gaz ce qui permet de réduire la pollution, et de suralimenter le moteur 1 ce qui permet d'améliorer le rendement, tout en permettant une communication de gaz entre les circuits de suralimentation et de recirculation.

Ainsi, les différents modes de réalisation de la présente invention permettent d'obtenir un système 3 de suralimentation des gaz d'admission et de recirculation des gaz d'échappement d'un moteur 1 dans lequel on peut contrôler la quantité de gaz alimentant la suralimentation et la quantité de gaz alimentant la recirculation, notamment en fonction des différents paramètres du moteur pour s'adapter aux différentes situations de vie du moteur. Suivant la puissance requise ou la quantité d'oxygène contenue dans l'air frais reçu au niveau de l'admission par exemple, la configuration du système sera adapté pour modifier la quantité de gaz recirculés et l'alimentation du turbocompresseur et éviter ainsi tout risque d'étouffement du moteur tout en maximisant le rendement et en minimisant la pollution créée par le moteur 1.

## Revendications

1. Dispositif (25) d'orientation des gaz d'échappement à la sortie des cylindres (2) d'un moteur (1), ledit dispositif (25) comprenant :
- Une vanne de décharge (17) destinée à être installée dans un conduit de décharge (15) d'un équipement configuré pour être entrainé par un fluide, notamment d'un turbocompresseur (9) entrainé par des gaz d'échappement du moteur (1), la vanne étant destinée à être reliée en sortie d'au moins un premier cylindre (2a, 2b, 2c) du moteur (1), ladite vanne de décharge (17) comportant une cavité (83) comprenant une première (85), une deuxième (87) et une troisième (89) ouvertures destinées à être reliées à un conduit respectif, la vanne de décharge (17) comprenant également des premier (91) et second (93) moyens d'obturation desdites respectivement première (85) et deuxième (87) ouvertures pour contrôler la mise en communication des conduits, les moyens d'obturation (91, 93) étant fixés sur un axe de guidage (97) configuré pour être mobile en translation entre une première position de fermeture de la première ouverture (85) par le premier moyen d'obturation (91) et une deuxième position de fermeture de la deuxième ouverture (87) par le deuxième moyen d'obturation (93), la vanne comprenant un moyen d'actionnement de l'axe de guidage, le moyen d'actionnement étant apte à être déplacé en rotation et permettant de transformer ce déplacement en rotation en un déplacement en translation de l'axe de guidage,
- Une vanne de recirculation (19) de gaz d'échappement destinée à être reliée en sortie d'au moins un deuxième cylindre (2d) du moteur (1),
- Un conduit (50) reliant entre elles lesdites vannes (17, 19).

2. Dispositif (25) d'orientation des gaz d'échappement selon la revendication 1, dans lequel les moyens d'obturation de la vanne de décharge (17) comprennent une première (95a) et une deuxième (95b) soupapes.

3. Dispositif (25) d'orientation des gaz d'échappement selon la revendication 2, dans lequel l'axe de guidage (97) de la vanne de décharge (17) est une tige sur laquelle les soupapes (95a, 95b) sont positionnées.

4. Dispositif (25) d'orientation des gaz d'échappement selon l'une des revendications 1 à 3, dont la cavité (83) de la vanne de décharge (17) a une forme sensiblement tubulaire, les première (85) et seconde (87) ouvertures étant positionnées aux deux extrémités du tube, la troisième ouverture (89) étant réalisée sur une paroi latérale du tube.

5. Dispositif (25) d'orientation des gaz d'échappement selon l'une des revendications précédentes, dans laquelle la première ouverture (85) de la vanne de décharge (17) est destinée à être reliée à une première partie du conduit de décharge (15) et/ou la deuxième ouverture (87) de la vanne de décharge (17) est destinée à être reliée à une deuxième partie du conduit de décharge (15).

6. Dispositif (25) d'orientation des gaz d'échappement selon l'une quelconque des revendications précédentes, dans lequel la vanne de recirculation (19) de gaz d'échappement comprend un corps (43) définissant :
- un conduit principal (45) destiné à être raccordé d'une part à la sortie du, au moins un, deuxième cylindre (2d) et d'autre part à un conduit de recirculation des gaz (21), et
- un conduit auxiliaire (50) débouchant dans ledit conduit principal (45) et destiné à être raccordé à la troisième ouverture (89) de la vanne de décharge (17),
ladite vanne de recirculation (19) comprenant en outre des moyens d'orientation (55) des gaz d'échappement configurés pour, dans une première position, permettre une pleine recirculation en empêchant la communication entre le conduit principal (45) et le conduit auxiliaire (50), et dans une deuxième position, permettre une obturation du conduit principal (45) de façon à mettre en communication le conduit principal (45) avec le conduit auxiliaire (50).

7. Dispositif (25) d'orientation des gaz d'échappement selon l'une quelconque des revendications précédentes, dans lequel les moyens d'obturation (91 et 93) de la vanne de décharge (17) sont configurés pour être ouverts ou fermés en fonction de la configuration de la vanne de recirculation (19) et/ou des paramètres du moteur (1).

8. Dispositif (25) d'orientation des gaz d'échappement selon l'une des revendications précédentes, dans lequel les moyens d'orientation de la vanne de recirculation (19) sont configurés pour être positionnés en fonction des paramètres du moteur (1) et/ou de la configuration des moyens d'obturation (91, 93) de la vanne de décharge (17).

9. Dispositif selon l'une quelconque des revendications précédentes, dans lequel les paramètres moteur comprennent au moins un élément parmi les paramètres suivants :
- le régime moteur,
- la pression à la sortie des cylindres (2),
- la température du moteur (1),
- le taux d'oxygène à l'entrée des cylindres (2),
- le débit de gaz recirculés à l'admission.

## Patentansprüche

1. Vorrichtung (25) zum Führen der Abgase am Ausgang der Zylinder (2) eines Motors (1), wobei die Vorrichtung (25) Folgendes aufweist:
- ein Ablassventil (17), das dazu bestimmt ist, in einer Ablassleitung (15) eines Gerätes installiert zu werden, das konfiguriert ist, um von einem Fluid angetrieben zu werden, insbesondere von einem Turbolader (9), der von Abgasen des Motors (1) angetrieben wird, wobei das Ventil dazu bestimmt ist, mit dem Auslass von mindestens einem ersten Zylinder (2a, 2b, 2c) des Motors (1) verbunden zu werden, wobei das Ablassventil (17) einen Hohlraum (83) aufweist, der eine erste (85), eine zweite (87) und eine dritte (89) Öffnung aufweist, die dazu bestimmt sind, mit einer jeweiligen Leitung verbunden zu werden, wobei das Ablassventil (17) auch ein erstes (91) und zweites (93) Verschlussmittel jeweils der ersten (85) und zweiten (87) Öffnung aufweist, um das Verbinden der Leitungen zu steuern, wobei die Verschlussmittel (91, 93) an einem Führungsstift (97) befestigt sind, der konfiguriert ist, um zwischen einer ersten geschlossenen Position der ersten Öffnung (85) durch das erste Verschlussmittel (91) und einer zweiten geschlossenen Position der zweiten Öffnung (87) durch das zweite Verschlussmittel (93) verschiebbar beweglich zu sein, wobei das Ventil ein Mittel zum Betätigen des Führungsstiftes aufweist, wobei das Mittel zum Betätigen geeignet ist, in Drehung versetzt zu werden, und wobei es ermöglicht, diese Drehbewegung in eine Verschiebung des Führungsstiftes zu verwandeln,
- ein Abgasrückführungsventil (19), das dazu bestimmt ist, mit dem Auslass von mindestens einem zweiten Zylinder (2d) des Motors (1) verbunden zu werden,
- eine Leitung (50), die die Ventile (17, 19) miteinander verbindet.

2. Vorrichtung (25) zum Führen der Abgase nach Anspruch 1, wobei die Verschlussmittel des Ablassventils (17) ein erstes (95a) und ein zweites (95b) Ventil aufweisen.

3. Vorrichtung (25) zum Führen der Abgase nach Anspruch 2, wobei der Führungsstift (97) des Ablassventils (17) eine Stange ist, auf der die Ventile (95a, 95b) angeordnet sind.

4. Vorrichtung (25) zum Führen der Abgase nach einem der Ansprüche 1 bis 3, wovon der Hohlraum (83) des Ablassventils (17) eine im Wesentlichen röhrenförmige Form aufweist, wobei die erste (85) und zweite (87) Öffnung an den zwei Enden des Rohrs angeordnet sind, wobei die dritte Öffnung (89) an einer Seitenwand des Rohrs ausgebildet ist.

5. Vorrichtung (25) zum Führen der Abgase nach einem der vorhergehenden Ansprüche, wobei die dritte Öffnung (85) des Ablassventils (17) dazu bestimmt ist, mit einem ersten Teil der Ablassleitung (15) verbunden zu werden und/oder die zweite Öffnung (87) des Ablassventils (17) dazu bestimmt ist, mit einem zweiten Teil der Ablassleitung (15) verbunden zu werden.

6. Vorrichtung (25) zum Führen der Abgase nach einem der vorhergehenden Ansprüche, wobei das Abgasrückführungsventil (19) einen Körper (43) aufweist, der Folgendes definiert:
- eine Hauptleitung (45), die dazu bestimmt ist, einerseits mit dem Ausgang des mindestens einen zweiten Zylinders (2d) und andererseits mit einer Abgasrückführungsleitung (21) verbunden zu werden, und
- eine Hilfsleitung (50), die in die Hauptleitung (45) mündet und dazu bestimmt ist, mit der dritten Öffnung (89) des Ablassventils (17) verbunden zu werden,
wobei das Rückführungsventil (19) ferner Mittel zum Führen (55) der Abgase aufweist, die konfiguriert sind, um in einer ersten Position eine volle Rückführung zu ermöglichen, indem die Verbindung zwischen der Hauptleitung (45) und der Hilfsleitung (50) verhindert wird, und in einer zweiten Position ein Verschließen der Hauptleitung (45) derart zu ermöglichen, um die Hauptleitung (45) mit der Hilfsleitung (50) in Verbindung zu setzen.

7. Vorrichtung (25) zum Führen der Abgase nach einem der vorhergehenden Ansprüche, wobei die Verschlussmittel (91 und 93) des Ablassventils (17) konfiguriert sind, um in Abhängigkeit von der Konfiguration des Rückführungsventils (19) und/oder der Parameter des Motors (1) geöffnet oder geschlossen zu werden.

8. Vorrichtung (25) zum Führen der Abgase nach einem der vorhergehenden Ansprüche, wobei die Mittel zum Führen des Rückführungsventils (19) konfiguriert sind, um in Abhängigkeit von den Parametern des Motors (1) und/oder von der Konfiguration der Verschlussmittel (91, 93) des Ablassventils (17) angeordnet zu werden.

9. Vorrichtung nach einem der vorhergehenden Ansprüche, wobei die Motorparameter mindestens ein Element aus den folgenden Parametern aufweisen:
- der Motordrehzahl,
- dem Druck am Ausgang der Zylinder (2),
- der Temperatur des Motors (1),
- dem Sauerstoffgehalt am Eingang der Zylinder (2),
- dem Durchsatz der rückgeführten Gase am Einlass.

## Claims

1. Device (25) for orienting exhaust gases at the outlet of the cylinders (2) of an engine (1), said device (25) comprising:
- a discharge valve (17) intended to be installed in a discharge duct (15) of an equipment item configured to be driven by a fluid, in particular of a turbocompressor (9) driven by exhaust gases of the engine (1), the valve being intended to be connected at the outlet of at least one first cylinder (2a, 2b, 2c) of the engine (1), said discharge valve (17) comprising a cavity (83) comprising a first (85), a second (87) and a third (89) opening which are intended to be connected to a respective duct, the discharge valve (17) also comprising first (91) and second (93) means for shutting off said respectively first (85) and second (87) openings to control the communication between the ducts, the shut-off means (91, 93) being fixed to a guide pin (97) configured to be movable translationally between a first position for closing the first opening (85) by the first shut-off means (91) and a second position for closing the second opening (87) by the second shut-off means (93), the valve comprising a means for actuating the guide pin, the actuating means being able to be moved rotationally and making it possible to convert this rotational movement into a translational movement of the guide pin,
- an exhaust-gas recirculation valve (19) intended to be connected at the outlet of at least one second cylinder (2d) of the engine (1),
- a duct (50) interconnecting said valves (17, 19).

2. Device (25) for orienting exhaust gases according to Claim 1, in which the shut-off means of the discharge valve (17) comprise a first (95a) and a second (95b) valve member.

3. Device (25) for orienting exhaust gases according to Claim 2, in which the guide pin (97) of the discharge valve (17) is a rod on which the valve members (95a, 95b) are positioned.

4. Device (25) for orienting exhaust gases according to one of Claims 1 to 3, of which the cavity (83) of the discharge valve (17) has a substantially tubular shape, the first (85) and second (87) openings being positioned at the two ends of the tube, the third opening (89) being formed in a lateral wall of the tube.

5. Device (25) for orienting exhaust gases according to one of the preceding claims, in which the first opening (85) of the discharge valve (17) is intended to be connected to a first part of the discharge duct (15) and/or the second opening (87) of the discharge valve (17) is intended to be connected to a second part of the discharge duct (15).

6. Device (25) for orienting exhaust gases according to any one of the preceding claims, in which the exhaust-gas recirculation valve (19) comprises a body (43) defining:
- a main duct (45) intended to be connected, on the one hand, to the outlet of the at least one second cylinder (2d) and, on the other hand, to a gas recirculation duct (21), and
- an auxiliary duct (50) opening into said main duct (45) and intended to be connected to the third opening (89) of the discharge valve (17),
said recirculation valve (19) additionally comprising exhaust-gas orientation means (55) configured in order, in a first position, to allow a full recirculation by preventing communication between the main duct (45) and the auxiliary duct (50) and, in a second position, to allow the main duct (45) to be shut off so as to place the main duct (45) in communication with the auxiliary duct (50).

7. Device (25) for orienting exhaust gases according to any one of the preceding claims, in which the shut-off means (91 and 93) of the discharge valve (17) are configured to be open or closed according to the configuration of the recirculation valve (19) and/or parameters of the engine (1).

8. Device (25) for orienting exhaust gases according to one of the preceding claims, in which the orientation means of the recirculation valve (19) are configured to be positioned according to the parameters of the engine (1) and/or the configuration of the shut-off means (91, 93) of the discharge valve (17).

9. Device according to any one of the preceding claims, in which the engine parameters comprise at least one element from the following parameters:
- the engine speed,
- the pressure at the outlet of the cylinders (2),
- the temperature of the engine (1),
- the level of oxygen at the inlet of the cylinders (2),
- the flow rate of recirculated gases at the intake.
